# EUROPÄISCHE PATENTSCHRIFT

(11) **EP 1 252 496 B1**
(45) Veröffentlichungstag und Bekanntmachung des Hinweises auf die Patenterteilung: **02.07.2008**
(21) Anmeldenummer: 01903658.1
(22) Anmeldetag: 18.01.2001
(51) Int. Cl.: G01N 9/36, B01L 7/02, G05D 22/02, G05D 11/13

(54) **VERFAHREN ZUR BESTIMMUNG DES ANTEILS EINER GASKOMPONENTE IN EINEM GASGEMISCH**
METHOD FOR DETERMINING THE PROPORTION OF A GAS CONSTITUENT CONTAINED IN A GAS MIXTURE
PROCEDE POUR DETERMINER LA PROPORTION D'UN CONSTITUANT GAZEUX DANS UN MELANGE GAZEUX

(30) Priorität: 20.01.2000 DE 10002309
(43) Veröffentlichungstag der Anmeldung: 30.10.2002
(73) Patentinhaber: Convotherm Elektrogeräte GmbH, 82436 Eglfing (DE)
(72) Erfinder: SCHWARZBÄCKER, Werner, 82436 Eglfing (DE); HORVATH, Jenö, 70184 Stuttgart (DE)
(74) Vertreter: Castell, Klaus
(86) Internationale Anmeldenummer: PCT/EP2001/000561
(87) Internationale Veröffentlichungsnummer: WO 2001/053797

(56) Entgegenhaltungen:
- DE-A- 2 259 459
- DE-A- 4 206 845
- DE-C- 19 611 528

## Beschreibung

Die Erfindung bezieht sich auf ein Verfahren zur Bestimmung des Anteils einer Gaskomponente, insbesondere Wasserdampf, in einem Gasgemisch unter Verwendung einer von einer Antriebsvorrichtung angetriebenen Fördereinrichtung für das Gasgemisch.

Zur Bestimmung von Gaskomponenten in einem Gasgemisch werden üblicherweise Sensoren verwendet. Je höher die Temperatur des Gases ist und je mehr die Sensoren Verunreinigungen ausgesetzt sind, desto störungsanfälliger werden diese Sensoren.

Aus der DE 42 06 845 C2 ist es bekannt, ausgehend von den bekannten Daten eines Gasgemisches den Anteil einer Gaskomponente, z.B. Wasserdampf, dadurch zu bestimmen, dass an einem Lüfter zur Erzeugung von Druckunterschieden Hilfsschaufeln angeordnet sind, wobei dann aus dem Druckunterschied an unterschiedlichen Messpunkten auf den Anteil von Wasserdampf geschlossen werden kann. Da diese Druckunterschiede nur sehr gering sind, müssen Druckdifferenzmessgeräte mit besonderer Messempfindlichkeit und Messgenauigkeit eingesetzt werden.

Aus der DE 22 59 459 ist es bei der Konditionierung von Textilien bekannt, den Dampfgehalt des Gemisches in regelmäßigen Abständen zu messen und bei Abweichung vom Sollwert zu korrigieren. Zur Messung des Mischungsverhältnisses von Dampf und Luft wird ein Ventilator in einer Meßvorrichtung verwendet, wobei in dieser Meßvorrichtung der erzeugte Gesamtdruck oder die Leistungsaufnahme des Ventilators bestimmt und dieser Wert zur Regelung des Mischungsverhältnisses verwendet wird.

Aufgabe der Erfindung ist es, bei einem Gargerät zur Behandlung von Nahrungsmitteln in einfacher Weise, d.h. unter Verwendung der bereits vorhandenen Antriebs- und Fördervorrichtung den einen Anteil einer Gaskomponente, insbesondere Wasserdampf in dem Gasgemisch festzustellen und damit ein Maß für die Feuchtigkeit zu erhalten.

Diese Aufgabe wird durch die im Anspruch 1 angegebenen Maßnahmen gelöst.

Bei diesem Lösungsgedanken macht man sich die Tatsache zunutze, dass die Dichte des Gasgemisches wesentlich die Förderleistung der Fördereinrichtung bestimmt, während die dynamische Viskosität des Gasgemisches für die Reibungsverluste der Fördereinrichtung mit dem Gasgemisch maßgeblich verantwortlich ist. Sind die Dichten und/oder dynamischen Viskositäten der Gaskomponenten unterschiedlich, ergibt sich je nach Zusammensetzung des Gasgemisches eine für das Gasgemisch charakteristische Dichte bzw. dynamische Viskosität. Bei dem erfindungsgemäßen Verfahren ist es dann nur noch notwendig, aus entsprechenden, in der Literatur vorhandenen Tabellen die Werte für die Dichte und die dynamische Viskosität der beiden Komponenten eines Gasgemisches bei jeweils festgelegten Druck- und Temperaturwerten aufzunehmen, wodurch man für jedes beliebige Mischungsverhältnis von zwei Komponenten die resultierende Dichte und die resultierende dynamische Viskosität dieses Gemisches erhält. Je größer die Dichte und die dynamische Viskosität des Gasgemisches sind, umso mehr Leistung muß eine Fördereinrichtung bei ansonsten gleichbleibenden Betriebsparametern aufbringen.

Eine bevorzugte Anwendung des erfindungsgemäßen Verfahrens besteht darin, dass die festgestellte Größe als Regelgröße zur Beeinflussung der Zusammensetzung des Gasgemisches, insbesondere zur Feuchtigkeitsregelung des Behandlungsmediums bei Geräten zur Behandlung von Nahrungsmitteln verwendet wird. Da im Falle solcher Gargeräte, z.B. Heißluftdämpfer, die Temperatur im Garraum als wesentliche Zustandsgröße ohnehin erfasst wird und der Barometerstand eine allgegenwärtige Information zum Druck ist, führt die Erfindung zu einem besonders einfachen, weitgehend störungsfreien, wirtschaftlichen und dazu noch relativ genauen Verfahren, um die Zusammensetzung des Gasgemisches Luft und Wasserdampf und damit die Feuchtigkeit im Gargerät zu messen.

Die Erfindung wird beispielhaft anhand beigefügter Zeichnungen näher erläutert. In der Zeichnung zeigen:
- **Figur 1:**: einen Schnitt durch ein Gargerät mit einer Auswerteeinrichtung zur Durchführung des Verfahrens; und
- **Figur 2:**: einen Schnitt nach der Linie II - II in Figur 1.

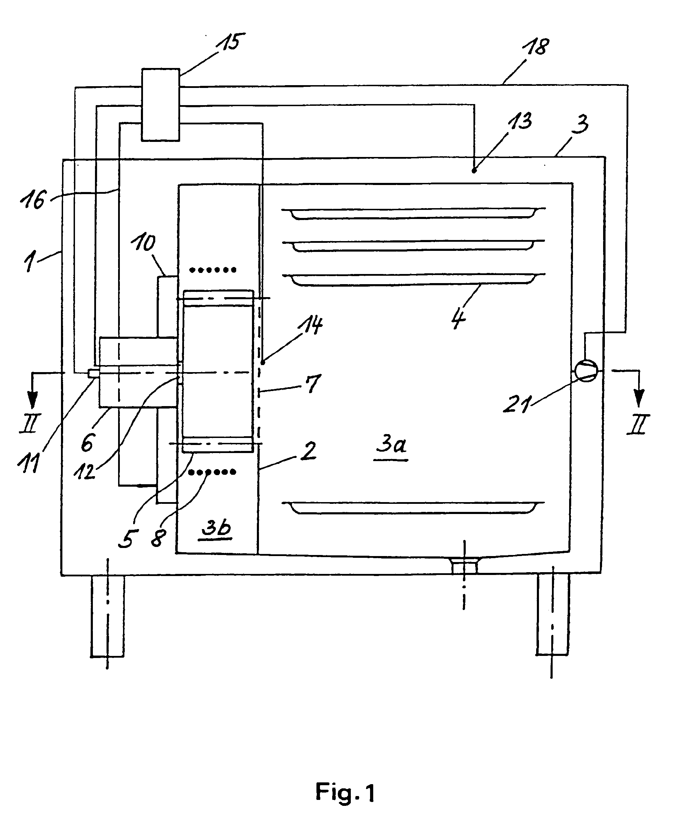

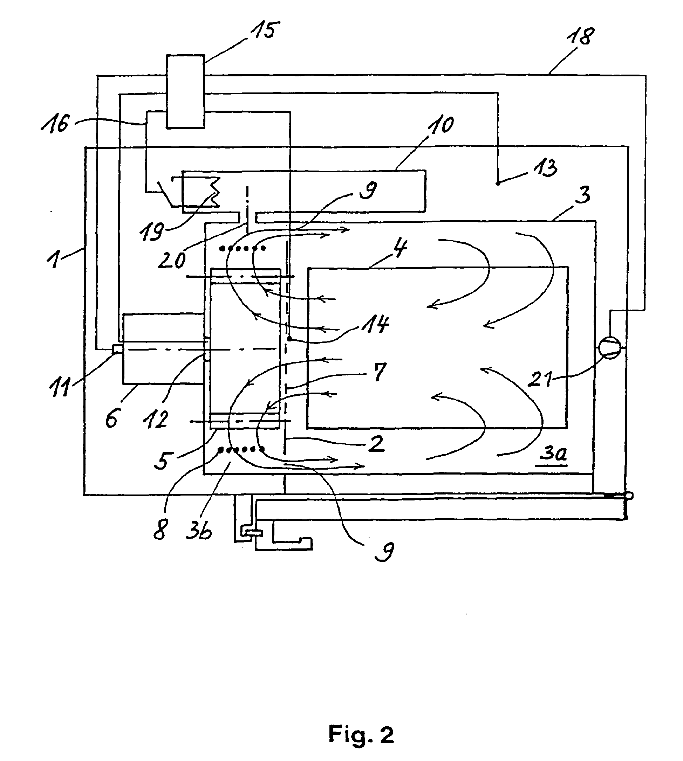

Wie aus den Figuren 1 und 2 ersichtlich, ist in einem Gehäuse 1 eines Gargerätes der Innenraum 3 durch eine Trennwand 2 in einen Garraum 3a und einen Betriebsraum 3b getrennt. In dem Garraum sind Roste 4 für die Aufnahme von zu behandelnden Nahrungsmitteln an einem nicht dargestellten Hordengestell vorgesehen. In dem Betriebsraum 3b ist ein Lüfter 5 durch einen Antriebsmotor 6 antreibbar, der über ein Gitter 7 das in dem Garraum 3a vorhandene Gasgemisch bzw. Medium ansaugt und dieses Medium über eine Heizung 8 und Schlitze 9 wieder in den Garraum hineindrückt. Mit 10 ist ein Dampferzeuger angedeutet, der den zur Erzeugung einer Dampfatmosphäre im Garraum 3a notwendigen Wasserdampf liefert.

Zum Bestimmen des Anteils der trockenen Luft bzw. des Anteils von Wasserdampf an dem Gasgemisch ist bei der Ausführungsform nach den Figuren 1 und 2 an dem Antriebsmotor 6 ein Drehzahlmesser 11 und eine Einrichtung 12 zum Messen der Synchrondrehzahl vorgesehen. Weiterhin ist ein Druckfühler 13 und innerhalb des Garraumes 3a ein Temperaturfühler 14 angeordnet. Da der Garraum drucklos ist, herrscht darin bis auf kurzfristige und vernachlässigbare Druckunterschiede immer der atmosphärische Umgebungsdruck. Der atmosphärische Druck muß daher nicht im Garraum gemessen werden, sondern kann irgendwo an besonders geeigneter Stelle ermittelt werden. Meist ist auch ein der geographischen Höhe des Aufstellungsortes des Gerätes entsprechender mittlerer Luftdruckwert bei der Bestimmung der Zusammensetzung des Gasgemisches ausreichend, so dass in diesem Fall der Druckfühler entfällt. Die Einrichtungen 11 bis 14 sind mit einer Messdatenverarbeitungs- und Regelvorrichtung 15, im weiteren kurz Rechner genannt, verbunden. Dieser Rechner kann außerhalb des Gerätes 1 angeordnet sein, wie dies in den Figuren 1 bis 2 angedeutet ist, ist aber vorzugsweise ein integrales Bestandteil der vorhandenen Geräteelektronik. Die übliche Geräteelektronik kann im allgemeinen die benötigten Funktionen des Rechners 15 aufnehmen, ohne dass sie wesentlich erweitert werden muß. Der Rechner ist programmierbar und enthält die verschiedenen Stoffwerte, wie z.B. Dichte und dynamische Viskosität von trockener und feuchter Luft bei den verschiedenen Temperaturen, beispielsweise im Temperaturbereich von 20° bis zu 300°C, und den infrage kommenden Luftdrücken. Weiterhin enthält dieser Rechner auch Motorkenndaten, so dass bei Feststellung eines bestimmten Schlupfes und Feststellung der Temperatur und des Druckes der Rechner in der Lage ist, die entsprechenden Anteile an trockener und feuchter Luft festzustellen, woraus man die Feuchtigkeit im Garraum erhält. Weiterhin kann der Rechner auch ein Programm enthalten, in welchem bestimmte Sollwerte für die Feuchtigkeit bei vorgegebenen Temperaturwerten und Druckwerten abgespeichert sind. Die festgestellten Anteile der beiden Gaskomponenten und die damit festgestellte Feuchtigkeit wird dann mit dem entsprechenden Sollwert verglichen und hieraus können dann über Leitungen 16 und 18 entsprechende Regelbefehle an eine Heizung 19 im Dampferzeuger 10 und an eine Entfeuchtungsvorrichtung 21 übermittelt werden, um durch Zufuhr von Wasserdampf bzw. Abfuhr von Feuchtigkeit aus dem Innenraum 3 die Zusammensetzung der Innen- bzw. Garraumatmosphäre wieder auf den gewünschten Wert einstellen zu können. Die Zufuhr von Wasserdampf aus dem Dampferzeuger erfolgt bei Aktivierung der Heizung 19 durch leichten Überdruck des erzeugten Wasserdampfes über eine Verbindungsleitung 20 zwischen Dampferzeuger 10 und Betriebsraum 3b. Der Druckausgleich im Innenraum erfolgt genauso wie im Fall der Abfuhr von Feuchtigkeit über nicht eingezeichnete Verbindungsrohre zwischen Innenraum und Umgebung. Im Fall der Abfuhr von Feuchtigkeit wird eine entsprechende Gasgemischmenge im Innenraum durch die im Verhältnis zur Garraumatmosphäre immer sehr trockene Umgebungsluft ersetzt.

## Patentansprüche

1. Verfahren zur Bestimmung des Anteils einer Gaskomponente, insbesondere Wasserdampf, in einem Gasgemisch, das zur Behandlung von Nahrungsmitteln in einem Garraum (3a) mittels einer Fördervorrichtung umwälzbar ist, wobei für den Antrieb ein Asynchronmotor (6) verwendet wird und wobei die sich beim Antrieb der Fördervorrichtung einstellende Drehzahldifferenz zur Synchrondrehzahl, d.h. der Schlupf als Maß für den gesuchten Anteil der Gaskomponente bei jeweils festgelegten Druck- und Temperaturwerten des Gasgemisches verwendet wird.

2. Verfahren nach Anspruch 1, **dadurch gekennzeichnet, dass** die festgestellte Größe als Regelgröße zur Beeinflussung der Zusammensetzung des Gasgemisches, insbesondere zur Feuchtigkeitsregelung des Behandlungsmediums bei Geräten zur Behandlung von Nahrungsmitteln verwendet wird.

## Claims

1. A method of determining the amount of a gas component, more specifically the amount of water vapour, in a gas mixture, that may be circulated in a cooking space (3a) by means of a conveying apparatus for processing food, an asynchronous motor (6) being used for the drive and the speed difference establishing with respect to the synchronous speed when driving the conveying apparatus, i.e., the slip being used as a measure for the amount of the gas component looked for, with the values for the pression and the temperature of the gas mixture being respectively defined.

2. The method as set forth in claim 1, **characterized in that** the located variable is used as the controlled variable for influencing the composition of the gas mixture, more specifically for controlling the humidity of the processing medium with instruments for processing food.

## Revendications

1. Procédé pour déterminer la part d'un composant gazeux, notamment de vapeur d'eau, dans un mélange gazeux qui est susceptible d'être circulé dans un espace de cuisson (3a) moyennant un dispositif de convoyage pour traiter des aliments, un moteur asynchrone (6) étant utilisé pour l'entraînement et la différence de régime qui s'établit par rapport au régime synchrone lors de l'entraînement du dispositif de convoyage, c.-à-d. le patinage, étant utilisée comme mesure pour la part recherchée du composant gazeux, les valeurs respectives pour la pression et la température du mélange gazeux étant fixées.

2. Procédé selon la revendication 1, **caractérisé en ce que** la grandeur constatée est utilisée comme grandeur commandée pour influencer la composition du mélange gazeux, notamment pour contrôler l'humidité du fluide de traitement dans des instruments destinés au traitement d'aliments.
